# EUROPÄISCHE PATENTANMELDUNG

(11) **EP 2 362 130 A2**
(43) Veröffentlichungstag der Anmeldung: **31.08.2011**
(21) Anmeldenummer: 10015310.5
(22) Anmeldetag: 04.12.2010
(51) Int. Cl.: F16L 37/091

(54) **Anschlussvorrichtung für eine Fluidleitung**

(30) Priorität: 23.02.2010 DE 102010008926
(71) Anmelder: Festo AG & Co. KG, 73734 Esslingen (DE)
(72) Erfinder: Weiß, Martin, 73035 Göppingen (DE)
(74) Vertreter: Abel, Martin

(57) **Zusammenfassung**

Es handelt sich um eine Anschlussvorrichtung für eine Fluidleitung (2), die einen Gehäusekörper (8) mit einem von einer Ausnehmung (12) durchsetzten Anschlussabschnitt (14) aufweist. In dem Anschlussabschnitt (14) befindet sich ein zur Fixierung der Fluidleitung (2) dienendes Halteelement (25), dem eine axial bewegliche Lösehülse (42) zugeordnet ist. Die Lösehülse (42) bildet zusammen mit einer durch Verrasten an ihr fixierten Schutzhülse (53) eine einheitlich verschiebbare Schutz- und Löseeinheit (54), die den Außenumfang des Anschlussabschnittes (14) überlappt.

## Beschreibung

Die Erfindung betrifft eine Anschlussvorrichtung für eine Fluidleitung, mit einem Gehäusekörper, der mindestens einen, sich in einer axialen Richtung erstreckenden Anschlussabschnitt aufweist, an dessen Vorderseite eine Ausnehmung ausmündet, in der ein zur lösbaren Fixierung einer eingesteckten Fluidleitung dienendes, nach radial innen ragende Halteklauen aufweisendes ringförmiges Halteelement angeordnet ist, und mit einer den Halteklauen axial vorgelagerten Lösehülse, die stirnseitig vorne aus der Ausnehmung herausragt und einen der Vorderseite des Anschlussabschnittes mit Abstand vorgelagerten, radial vorspringenden Betätigungsabschnitt aufweist, wobei die Lösehülse relativ zu dem Anschlussabschnitt und dem Halteelement axial verschiebbar ist und durch Einwirkung auf den Betätigungsabschnitt derart axial gegen das Halteelement drückbar ist, dass dessen Halteklauen zur Freigabe einer eingesteckten Fluidleitung nach radial außen bewegt werden.

Eine aus der EP 0 745 801 A1 bekannte Anschlussvorrichtung dieser Art enthält einen Gehäusekörper mit einer durchgehenden Ausnehmung, in der ein ringförmiges Halteelement und eine dem Halteelement vorne vorgelagerte Lösehülse fixiert sind. Eine anzuschließende Fluidleitung kann durch die Lösehülse hindurch in das Halteelement eingesteckt werden, so dass sie von nach radial innen ragenden Halteklauen des Halteelementes beaufschlagt und festgehalten wird. Zum Entnehmen der Fluidleitung kann die Lösehülse durch Einwirkung auf einen radial vorstehenden Betätigungsabschnitt derart drückend beaufschlagt werden, dass sie sich axial verlagert und die Halteklauen von der eingesteckten Fluidleitung abhebt.

Ein Nachteil der bekannten Anschlussvorrichtung besteht darin, dass sie im Bereich ihres Außenumfanges zahlreiche Kanten und Zwischenräume aufweist, an denen sich Verschmutzungen ablagern können. Die Anschlussvorrichtung ist daher wenig reinigungsfreundlich und kann deshalb in reinigungsintensiven Bereichen, beispielsweise in der Lebensmittel- und Pharmaindustrie, nur bedingt eingesetzt werden.

Die DE 39 05 722 C2 beschreibt unter anderem eine Anschlussvorrichtung, deren Lösehülse zwei zueinander konzentrische Hülsenabschnitte aufweist, wobei der äußere Hülsenabschnitt den Gehäusekörper der Anschlussvorrichtung axial überlappt. Auf diese Weise wird ein dem Gehäusekörper axial vorgelagerter Zwischenraum zur Umgebung hin abgeschirmt, was die Reinigungsmöglichkeiten erheblich verbessert. Wegen der speziellen Lösehülse ist die Herstellung dieser Anschlussvorrichtung jedoch relativ aufwendig, so dass sie sich aus Kostengründen für normale Einsätze, bei denen die Verschmutzungsempfindlichkeit keine Rolle spielt, nicht empfiehlt.

Aus der DE 102 49 958 B3 ist eine Anschlussvorrichtung bekannt, die speziell im Hinblick auf eine gute Reinigungsmöglichkeit konzipiert ist. Sie enthält eine axial bewegliche Spannzange und eine zur Betätigung der Spannzange axial auf einem Gehäusekörper verschraubbare einstückige Betätigungshülse, die am vorderen Stirnbereich eine die eingesteckte Fluidleitung umschließende Dichtung trägt. Bei dieser Anschlussvorrichtung wird eine Fluidleitung nicht schon durch den Einsteckvorgang fixiert, sondern bedarf zu ihrer Fixierung einer aktiven axialen Verstellung der Betätigungshülse in Richtung der Rückseite des Gehäusekörpers. Insofern ist die Handhabung dieser auf optimierte Reinigungsfreundlichkeit ausgelegten Anschlussvorrichtung wenig komfortabel.

Eine ebenfalls auf optimierte Reinigungsfreundlichkeit ausgelegte Anschlussvorrichtung ist aus der EP 0 978 679 B1 bekannt. Deren Gehäusekörper verfügt an der vorderen Stirnseite über eine klappbare Dichtung, die von der Stirnfläche einer eingesteckten Fluidleitung so beaufschlagt wird, dass sie sich an den Außenumfang der Fluidleitung anlegt. Das Fixieren der Fluidleitung am Anschlusskörper erfolgt allein dadurch, dass die Fluidleitung auf einen Anschlussstutzen aufgesteckt wird, der am Außenumfang einen sich in die Innenfläche der Fluidleitung eindrückenden Haltevorsprung aufweist.

Aus der DE 601 05 440 T2 ist eine Anschlussvorrichtung bekannt, die über einen weiblichen Teil verfügt, in den das Ende einer Fluidleitung einsteckbar ist und der ein ringförmiges Halteelement zum Festhalten der eingesteckten Fluidleitung aufweist. Ein in dem weiblichen Teil angeordneter hülsenförmiger Trennstößel kann gegen das Halteelement gedrückt werden, um die festgehaltene Fluidleitung zur Entnahme freizugeben. Ferner ist eine bezüglich dem Trennstößel separate, als Schutzhaube fungierende Muffe vorhanden, die unabhängig von dem Trennstößel auf den weiblichen Teil aufsteckbar ist, um ein zufälliges Betätigen des Trennstößels zu verhindern. Um den Trennstößel betätigen zu können, ist zuvor die Muffe bzw. Schutzhaube abzunehmen.

Die DE 40 02 057 A1 offenbart eine Steckarmatur zum Anschließen von Rohrleitungen, bei der in einem Gehäusekörper eine zum Festhalten einer eingesteckten Rohrleitung dienende

Spannzange verschiebbar gelagert ist. Die Spannzange ist zweiteilig ausgebildet und verfügt über einen mehrere Spannarme tragenden Ringabschnitt, auf den außen eine als Löseelement fungierende Schutzkappe aufgesetzt ist. Die Schutzkappe verfügt über eine radial abstehende Dichtlippe, die dichtend an einer Stirnfläche des Gehäusekörpers anliegt, ohne den Gehäusekörper axial zu überlappen.

Es ist die Aufgabe der vorliegenden Erfindung, bei einer Anschlussvorrichtung der eingangs genannten Art Maßnahmen vorzusehen, die die Reinigungsfreundlichkeit verbessern.

Zur Lösung dieser Aufgabe ist an der Lösehülse durch Verrastung eine diesbezüglich separate Schutzhülse so fixiert oder fixierbar, dass sie gemeinsam mit der Lösehülse eine axial verschiebbare Schutz- und Löseeinheit bildet, wobei sich die Schutzhülse unter axialer Überlappung des Anschlussabschnittes in Richtung dessen Rückseite erstreckt und dabei sowohl den zwischen dem Betätigungsabschnitt und dem Anschlussabschnitt vorhandenen axialen Zwischenraum als auch den überlappten Längenabschnitt des Anschlussabschnittes ringsum umschließt.

Durch die an der Lösehülse fixierte Schutzhülse werden nun der zwischen dem Betätigungsabschnitt und dem Anschlussabschnitt vorhandene Zwischenraum wie auch der von der Schutzhülse überlappte Bereich des Gehäusekörpers abgedeckt, so dass sich dort keine Verunreinigungen ablagern können, die die Reinigung der Anschlussvorrichtung behindern. Die Schutzhülse kann außen derart glattflächig ausgeführt werden, dass sich keine Schmutznester bilden können und eine eventuell aufgesprühte Reinigungsflüssigkeit problemlos abfließen kann. Die Betätigung der Anschlussvorrichtung wird durch diese Maßnahme nicht behindert, weil die Lösehülse gemeinsam mit der Schutzhülse eine als Schutz- und Löseeinheit bezeichnete Bewegungseinheit bildet, die sich einheitlich verlagern lässt, um zum Zwecke eines Lösens einer eingesteckten Fluidleitung das Halteelement zu beaufschlagen. Ein besonderer Vorteil der erfindungsgemäßen Ausgestaltung liegt in der bezüglich der Lösehülse separaten Ausbildung der Schutzhülse und deren Rastbefestigung an der Lösehülse, da somit ein fakultatives Ausrüsten einer Anschlussvorrichtung mit einer Schutzhülse ermöglicht wird. Bestehen keine besonderen Anforderungen an die Reinigungsfreundlichkeit, kann die Schutzhülse entfallen und die Anschlussvorrichtung kann konventionell eingesetzt werden. Dadurch werden unnötige Herstellungskosten vermieden. Eine Ausrüstung mit der Schutzhülse findet nur dann statt, wenn besondere Anforderungen an die Reinigungsfreundlichkeit gestellt werden. Es besteht überdies die Möglichkeit, die Schutzhülse so zu gestalten, dass ein jederzeitiges Nachrüsten konventioneller Anschlussvorrichtungen einfach dadurch möglich ist, dass die Schutzhülse auf die Lösehülse aufgerastet wird.

Vorteilhafte Weiterbildungen der Erfindung gehen aus den Unteransprüchen hervor.

Bei dem Betätigungsabschnitt handelt es sich zweckmäßigerweise um einen vergleichbar einem Ringflansch radial abstehenden Ringvorsprung der Lösehülse, der an einem aus der Ausnehmung des Anschlussabschnittes herausragenden Hülsenabschnitt der Lösehülse angeordnet ist.

Eine bevorzugte Art der Rastverbindung sieht vor, dass die Schutzhülse mit dem radial abstehenden Betätigungsabschnitt der Lösehülse verrastet ist. Der Betätigungsabschnitt eignet sich wegen seiner vorstehenden Gestaltung besonders gut zur Fixierung der Schutzhülse.

Die Rastverbindung braucht nicht zwingend lösbar ausgebildet sein, da eine montierte Schutzhülse normalerweise nicht mehr entfernt werden muss. Gleichwohl wäre allerdings auch eine lösbare Verrastung denkbar.

Eine besonders sichere und einfache Rastverbindung lässt sich dadurch erzielen, dass am Innenumfang der Schutzhülse eine bevorzugt als Ringnut ausgebildete, nach radial innen hin offene Rastnut vorgesehen ist, in die der Betätigungsabschnitt der Lösehülse mit seinem radial außen liegenden Randabschnitt eingreift.

Prinzipiell könnte die Schutzhülse so ausgeführt sein, dass sie sich ausgehend von dem Betätigungsabschnitt nur in Richtung zur Rückseite des Anschlussabschnittes erstreckt und somit keine oder eine nur geringfügige radiale Überlappung des Betätigungsabschnittes an dessen dem Halteelement entgegengesetzter Stirnseite stattfindet. Es wird allerdings als besonders vorteilhaft angesehen, wenn die Schutzhülse becherförmig ausgestaltet ist und von axial außen her auf die Lösehülse aufgesteckt ist, so dass ihr Bodenabschnitt dem Betätigungsabschnitt vorgelagert ist und sich insbesondere an diesem Betätigungsabschnitt abstützt. Eine mittige Bodendurchbrechung des Bodenabschnittes, die mit der Durchgangsöffnung der Lösehülse fluchtet, ermöglicht das Hindurchführen der anzuschließenden Fluidleitung.

Eine zur Fixierung an der Lösehülse dienende Rastnut der Schutzhülse kann so ausgebildet sein, dass die äußere ihrer beiden Nutflanken von dem ringförmigen Bodenabschnitt gebildet ist.

Vorzugsweise wird die Bodendurchbrechung in ihrem Querschnitt so ausgeführt, dass selbiger im Wesentlichen dem Außendurchmesser einer eingesteckten Fluidleitung entspricht und bei eingesteckter Fluidleitung ein nur minimaler Spalt vorliegt, in den kaum Verunreinigungen eintreten könnten. Ungeachtet dessen ist es auf jeden Fall zweckmäßig, an dem Bodenabschnitt einen zur Bodendurchbrechung koaxialen Dichtungsring anzuordnen, der die eingesteckte Fluidleitung konzentrisch umschließt und an deren Außenumfang dichtend anliegt. Ein solcher Dichtungsring kann beispielsweise durch eine Schnappverbindung an dem Bodenabschnitt fixiert sein oder auch durch stoffschlüssige Verbindung, insbesondere auch durch einheitliche Realisierung zusammen mit der Schutzhülse in Form eines Mehrkomponenten-Spritzgussteils.

Der Dichtungsring kann an der der Lösehülse entgegengesetzten Axialseite über den Bodenabschnitt vorstehen und insbesondere eine Dichtungslippe aufweisen, die unter radialer Vorspannung am Außenumfang der eingesteckten Fluidleitung anliegt.

Der Dichtungsring könnte auch derart axial in den Bodenabschnitt integriert sein, dass er stirnseitig außen nicht über die Schutz- und Löseeinheit vorsteht.

Eine becherförmige Schutzhülse verfügt zweckmäßigerweise über einen sich an den Bodenabschnitt koaxial anschließenden Hülsenabschnitt, der den Anschlussabschnitt des Gehäusekörpers entlang wenigstens einer Teillänge ringsum umschließt.

An der der Rückseite des Anschlussabschnittes zugewandten Vorderseite ist der Schutzhülse zweckmäßigerweise eine über gummielastische Eigenschaften verfügende ringförmige Dichtungseinheit vorgelagert, die axial verformbar ist. Eine solche verformbare Dichtungseinheit kann den zur Gewährleistung der axialen Bewegungsmöglichkeit der Schutz- und Löseeinheit erforderlichen axialen Zwischenraum zwischen der Schutzhülse und einem die Anschlussvorrichtung tragenden Trägerbauteil überbrücken, so dass alle von dem Trägerbauteil wegragenden Komponenten der Anschlussvorrichtung durch die Schutzhülse und die Dichtungseinheit zur Umgebung hin abgeschirmt sind.

Zweckmäßigerweise endet die Schutzhülse bei unbetätigter Lösehülse mit Abstand vor dem rückseitigen Endbereich des Anschlussabschnittes, um die axiale Verstellbarkeit der Schutz- und Löseeinheit zu gewährleisten. Besagter Abstand ist zweckmäßigerweise von der schon erwähnten Dichtungseinheit überbrückt.

Es ist zweckmäßig, die Dichtungseinheit an der Schutzhülse zu befestigen, so dass sie mit dieser eine Baueinheit bildet. Sie kann beispielsweise durch eine Schnappverbindung fixiert sein oder auch stoffschlüssig, insbesondere durch gemeinsame Realisierung der beiden Komponenten im Rahmen eines Mehrkomponenten-Spritzgussteils.

Die Dichtungseinheit erstreckt sich ausgehend von der Schutzhülse zweckmäßigerweise wenigstens bis zum rückseitigen Endbereich des Anschlussabschnittes, so dass sie sich an einem die Anschlussvorrichtung tragenden Trägerbauteil axial abstützen kann. Schließt sich an den Anschlussabschnitt noch ein die Verbindung zwischen der Anschlussvorrichtung und dem Trägerbauteil abdichtender Dichtungsring an, kann die Dichtungseinheit axial rückseitig über den Anschlussabschnitt hinausragen und sich dabei auch noch axial über den Dichtungsring hinweg erstrecken.

Der Gehäusekörper ist zweckmäßigerweise abgestuft und verfügt rückseitig anschließend an den Anschlussabschnitt über einen einen diesbezüglich kleineren Außenquerschnitt aufweisenden Befestigungsabschnitt, der beispielsweise zur Einpressbefestigung oder zur Schraubbefestigung ausgelegt sein kann. In diesem Zusammenhang ist es möglich, die der Schutzhülse vorne vorgelagerte Dichtungseinheit so auszubilden, dass sie im Bereich der Abstufung den Anschlussabschnitt rückseitig umgreift. Es ist in diesem Zusammenhang möglich, den zur Abdichtung der Anschlussvorrichtung genutzten Dichtungsring durch einen entsprechend ausgebildeten ringförmigen Dichtungsabschnitt der Dichtungseinheit zu ersetzen.

Die Schutzhülse kann aus an den jeweiligen Anwendungsfall angepassten Materialien bestehen. Beispielsweise lässt sie sich aus Metall, hierbei insbesondere Aluminium oder nichtrostender Stahl, oder aus Kunststoffmaterial realisieren.

Nachfolgend wird die Erfindung anhand der beiliegenden Zeichnung näher erläutert. In dieser zeigen:

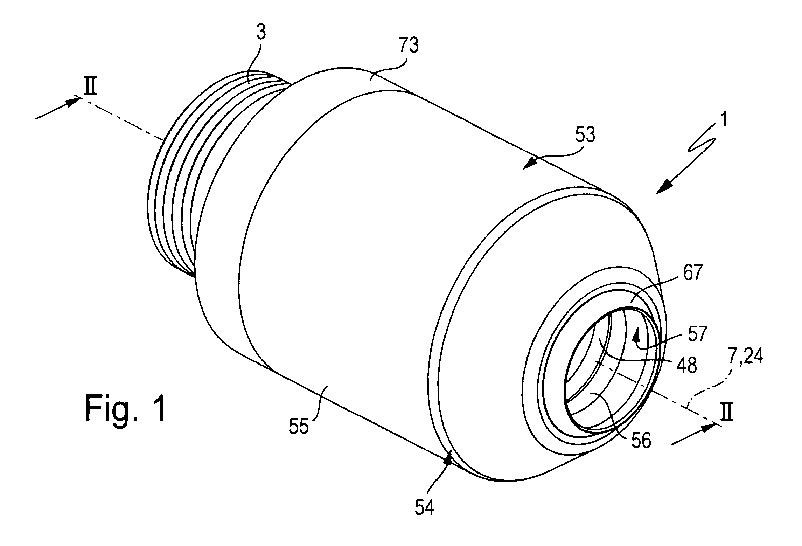

- Figur 1: eine bevorzugte Ausführungsform der erfindungsgemäßen Anschlussvorrichtung in einer perspektivischen Darstellung und
- Figur 2: einen Längsschnitt durch die Anschlussvorrichtung aus Figur 1 gemäß Schnittlinie II-II im an einem Trägerbauteil montierten Zustand, wobei strichpunktiert die zum Zwecke eines Lösens einer eingesteckten Fluidleitung von der Schutz- und Löseeinheit eingenommene betätigte Stellung angedeutet ist.

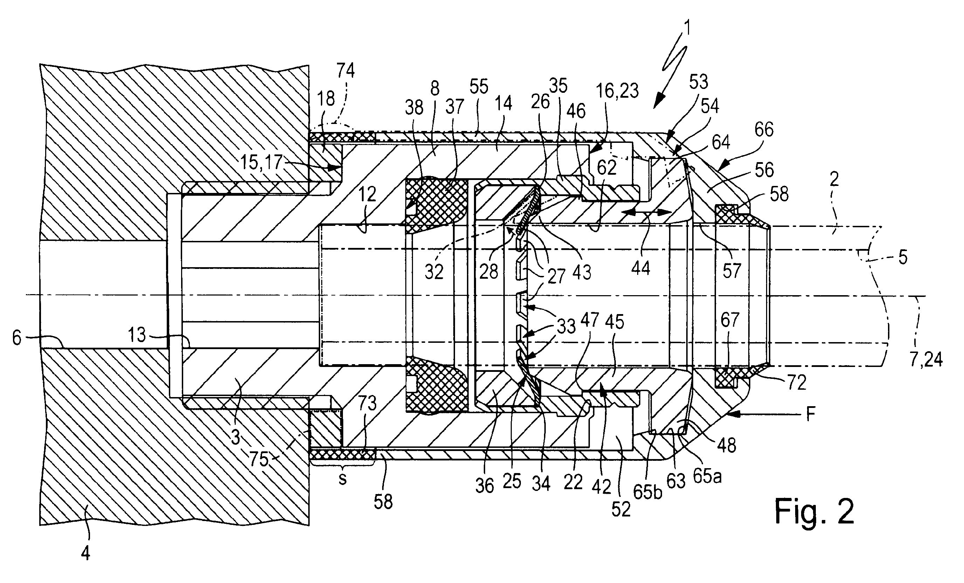

Die in ihrer Gesamtheit mit Bezugsziffer 1 bezeichnete Anschlussvorrichtung ermöglicht ein insbesondere fluiddichtes Anschließen einer in Figur 2 im angeschlossenen Zustand gezeigten Fluidleitung 2. Die Fluidleitung 2 ist insbesondere ein Fluidschlauch, kann aber beispielsweise auch als starres Rohr oder Rohrabschnitt ausgebildet sein.

Die Anschlussvorrichtung 1 ist zweckmäßigerweise mit einem Befestigungsabschnitt 3 versehen, der ihre Montage, ob lösbar oder unlösbar, an einem schematisch angedeuteten Trägerbauteil 4 ermöglicht. Das Trägerbauteil 4 ist beispielsweise ein Gehäuse einer fluidtechnischen Komponente, beispielsweise eines Ventils oder eines fluidbetätigten Antriebes. Im an die Anschlussvorrichtung 1 angeschlossenen Zustand der Fluidleitung 2 wird durch die Anschlussvorrichtung 1 hindurch eine Fluidverbindung zwischen dem in der Fluidleitung 2 ausgebildeten Leitungskanal 5 und einem Bauteilkanal 6 des Trägerbauteils 4 hergestellt.

Die Anschlussvorrichtung 1 verfügt über einen beim Ausführungsbeispiel länglichen, eine Längsachse 7 aufweisenden Gehäusekörper 8, der in seiner Längsrichtung von einer Ausnehmung 12 durchsetzt ist. In die Ausnehmung 12 ist die angeschlossene Fluidleitung 2 eingesteckt. Ein sich an die eingesteckte Fluidleitung 2 anschließender Längenabschnitt der Ausnehmung 12 bildet einen Fluidkanal 13, der die Verbindung zwischen dem Leitungskanal 5 und dem Bauteilkanal 6 herstellt.

Der schon erwähnte Befestigungsabschnitt 3 ist von einem rückseitigen Endabschnitt des Gehäusekörpers 8 gebildet. Er verfügt beim Ausführungsbeispiel über ein Außengewinde, mit dem er in das Trägerbauteil 4 einschraubbar ist. Alternativ kann er beispielsweise auch zur Herstellung einer unlösbaren Einpressverbindung ausgestaltet sein.

An den Befestigungsabschnitt 3 schließt sich in axialer Richtung zur Vorderseite hin ein Anschlussabschnitt 14 des Gehäusekörpers 8 an. Dieser ist zweckmäßigerweise einstückig mit dem Befestigungsabschnitt 3 ausgebildet. Zweckmäßigerweise hat der Anschlussabschnitt eine zylindrische, insbesondere kreiszylindrische Außenkontur.

Der Anschlussabschnitt 14 hat eine zum Befestigungsabschnitt 3 hin orientierte Rückseite 15 und eine diesbezüglich axial entgegengesetzte Vorderseite 16. Zweckmäßigerweise ist der Außenquerschnitt des Anschlussabschnittes 14 größer als derjenige des Befestigungsabschnittes 3, so dass der Übergangsbereich zwischen dem Anschlussabschnitt 14 und dem Befestigungsabschnitt 3 abgestuft ist. Bedingt durch diese Abstufung verfügt der Anschlussabschnitt 14 an seiner Rückseite 15 über eine nach rückwärts orientierte, dem gegebenenfalls vorhandenen Trägerbauteil zugewandte ringförmige rückseitige Stirnfläche 17.

Um eine fluiddichte Verbindung zwischen der Anschlussvorrichtung 1 und dem Trägerbauteil 4 zu erhalten, kann auf den Befestigungsabschnitt 3 eine ringförmige Dichtung 18 koaxial aufgesetzt sein, die bei montierter Anschlussvorrichtung 1 einerseits an der rückwärtigen Stirnfläche 17 und andererseits an der gegenüberliegenden Fläche des Trägerbauteils 4 dichtend anliegt.

An seiner Vorderseite 16 hat der Anschlussabschnitt 14 eine die dortige Mündung 22 der Ausnehmung 12 umschließende ringförmige vordere Stirnfläche 23.

Der Anschlussabschnitt 14 hat eine Längsachse 24, die zweckmäßigerweise mit der Längsachse 7 des Gehäusekörpers 8 zusammenfällt.

In dem sich im Innern des Anschlussabschnittes 14 erstreckenden Längenabschnitt der Ausnehmung 12 ist ein ringförmiges, insbesondere aus Metall bestehendes Halteelement 25 koaxial angeordnet. Zweckmäßigerweise ist es in axialer Richtung unbewegbar bezüglich des Anschlussabschnittes 14 fixiert. Es verfügt über einen radial außen liegenden ringförmigen Befestigungsabschnitt 26, ausgehend von dem mehrere Halteklauen 27 nach radial innen ragen. Die Halteklauen 27 sind an dem Befestigungsabschnitt 26 in dessen Umfangsrichtung verteilt angeordnet, so dass das Halteelement 25 ähnlich einer Kralle konzipiert ist. Alle Halteklauen 27 sind federelastisch verschwenkbar, so dass sie aus der in durchgezogenen Linien abgebildeten, im nicht beaufschlagten Zustand eingenommenen Grundstellung gemäß Pfeil 28 nach radial außen in eine strichpunktiert angedeutete Lösestellung 32 verschwenkbar sind. Diese Schwenkbewegung ist reversibel.

Der Durchmesser der von den Halteklauen 27 gemeinsam umschlossenen Durchtrittsöffnung des Halteelementes 25 ist in der Grundstellung kleiner als in der Lösestellung. Er ist in der Grundstellung insbesondere auch kleiner als der Außendurchmesser der anzuschließenden Fluidleitung 2.

Eine anzuschließende Fluidleitung 2 wird von der Vorderseite 16 her in die Ausnehmung 12 eingeführt und dabei durch das ringförmige Halteelement 25 hindurchgesteckt. Bei diesem Hindurchstecken werden die Halteklauen 27 von der Fluidleitung 2 an ihren der Vorderseite 16 zugewandten Vorderflächen 33 beaufschlagt und gemäß Pfeil 28 unter federelastischer Verformung nach außen geschwenkt, so dass sie unter Vorspannung am Außenumfang der Fluidleitung 2 anliegen.

Für die bevorzugte axial unbewegliche Fixierung des Halteelementes 25 bezüglich des Anschlussabschnittes 14 sorgt der Befestigungsabschnitt 26. Dieser ist in einer ringförmigen Haltenut 34 eingeklemmt, die gemeinsam von einer axial unbeweglich in die Ausnehmung 12 eingesetzten Befestigungshülse 35 und einem axial unbeweglich in die Befestigungshülse 35 eingesetzten Stützring 36 gebildet ist. Die Befestigungshülse 35 kann an der Vorderseite 16 aus dem Anschlussabschnitt 14 herausragen.

Zweckmäßigerweise sind die Halteklauen 27 so geformt, dass sie bereits in der Grundstellung einen schrägen Verlauf haben, derart, dass sie sich ausgehend von dem ringförmigen Befestigungsabschnitt 26 schräg nach radial innen und zugleich in Richtung zu der Rückseite 15 erstrecken. Diese Formgebung hat den Vorteil, dass die auf den Außenumfang der Fluidleitung 2 ausgeübte Klemmkraft verstärkt wird, wenn auf die Fluidleitung 2 eine nach axial außen gerichtete Kraft einwirkt.

Ausgehend von der Vorderseite 16 axial innerhalb des Halteelementes 25, ist in der Ausnehmung 12 zweckmäßigerweise auch eine ringförmige Leitungsdichtung 37 koaxial angeordnet. Selbige kann sich axial innen an einer durch eine Abstufung der Ausnehmung 12 gebildeten, der Mündung 22 zugewandten ringförmigen Stützfläche 38 abstützen. Ihr Innendurchmesser ist so gewählt, dass sie von einer eingesteckten Fluidleitung 2 elastisch aufgeweitet wird und mit Vorspannung am Außenumfang dieser Fluidleitung 2 zur Anlage gelangt.

Um eine eingesteckte Fluidleitung 2 bei Bedarf wieder entnehmen zu können, ist eine zu der Längsachse 24 koaxial angeordnete Lösehülse 42 vorhanden. Die Lösehülse 42 ist so angeordnet, dass sie den Halteklauen 27 des Halteelementes 25 zur Vorderseite 16 hin vorgelagert ist und über einen stirnseitigen Beaufschlagungsabschnitt 43 verfügt, der den Vorderflächen 33 der Halteklauen 27 axial gegenüberliegt.

Die Lösehülse 42 taucht zumindest ein Stückweit von der Vorderseite 16 her in die Ausnehmung 12 hinein, und zwar bis in die Nähe des Halteelementes 25, so dass ihr dem Halteelement 25 zugewandter Endabschnitt den Beaufschlagungsabschnitt 43 bildet.

Die Lösehülse 42 ist relativ zu dem Gehäusekörper 8 und zu dem Halteelement 25 in Achsrichtung der Längsachse 24 axial verschiebbar. Diese Verschiebemöglichkeit ist durch einen Doppelpfeil bei 44 angedeutet.

Die Lösehülse 42 hat einen den Beaufschlagungsabschnitt 43 bildenden Hülsenabschnitt 45, mit dem sie relativ zum Gehäusekörper 8 zur Ermöglichung der Verschiebbarkeit 44 linear verschiebbar geführt ist. Bevorzugt wird die Verschiebeführung durch die Befestigungshülse 35 erzielt, in die die Lösehülse 42 beim Ausführungsbeispiel mit ihrem Hülsenabschnitt 45 axial verschiebbar eintaucht. Mindestens ein von dem Hülsenabschnitt 45 radial abstehender Sicherungsvorsprung 46 hintergreift eine gehäusefeste, beim Ausführungsbeispiel an der Befestigungshülse 35 ausgebildete Anschlagfläche 47, wodurch die Lösehülse 42 gegen ein versehentliches Herausziehen aus der Ausnehmung 12 gesichert ist.

Axial außerhalb der Ausnehmung 12 verfügt die Lösehülse 42 über einen von dem Hülsenabschnitt 45 radial abstehenden Betätigungsabschnitt 48. Dieser ist zweckmäßigerweise ringförmig ausgebildet und bildet einen zur Längsachse 24 koaxialen Ringvorsprung. Zwischen der Vorderseite 16, insbesondere der vorderen Stirnfläche 23, des Anschlussabschnittes 14 und dem diesbezüglich beabstandeten Betätigungsabschnitt 48 befindet sich ein nutähnlich konturierter axialer Zwischenraum 52.

Durch in Richtung der Rückseite 15 orientierte Einwirkung auf die Lösehülse 42 und insbesondere deren Betätigungsabschnitt 48 kann die Lösehülse 42 aus der in der Zeichnung ersichtlichen unbetätigten Stellung in eine axial weiter in die Ausnehmung 12 eintauchende Freigabestellung verlagert werden. Bei einer solchen Betätigung werden die Halteklauen 27 gemäß Pfeil 28 vom Außenumfang der eingesteckten Fluidleitung 2 abgehoben oder wenigstens in ihrer diesbezüglichen Vorspannung so reduziert, dass die Fluidleitung 2 problemlos aus der Ausnehmung 12 herausgezogen werden kann. Nimmt man die Betätigungskraft von der Lösehülse 42 wieder weg, wird sie durch die federelastisch auf sie einwirkenden Halteklauen 27 in die unbetätigte Stellung zurückgeschoben.

Die Anschlussvorrichtung 1 ist außerdem mit einer Schutzhülse 53 ausgestattet, die die Verschmutzungsempfindlichkeit verringert und die Reinigungsfreundlichkeit verbessert.

Die Schutzhülse 53 ist mit der Lösehülse 42 zu einer im Folgenden als Schutz- und Löseeinheit 54 bezeichneten Baugruppe zusammengefasst, so dass sie in ihren möglichen Bewegungen miteinander gekoppelt sind und, insbesondere in axialer Richtung, stets nur einheitlich verschiebbar sind. Die durch einen Doppelpfeil verdeutlichte Verschiebbarkeit 44 gilt also für die gesamte Schutz- und Löseeinheit 54.

Zur Bildung der Schutz- und Löseeinheit 54 ist die Schutzhülse 53 an der Lösehülse 42 durch Verrastung fixiert. Dies gestattet einen sehr einfachen Zusammenbau. Zweckmäßigerweise muss die Schutzhülse 53 lediglich in axialer Richtung auf die Lösehülse 42 aufgesteckt werden.

Ein Vorteil dieser Bauweise liegt darin, dass man die Anschlussvorrichtung 1 wahlweise ohne oder mit Schutzhülse 53 nutzen kann. Für Anwendungen, in denen keine Verschmutzungsproblematik besteht, kann man sich die Schutzhülse 53 ersparen und hat eine kostengünstig herstellbare Anschlussvorrichtung 1 zur Verfügung. Ist hingegen die Schutzfunktion gewünscht, braucht lediglich die Schutzhülse 53 auf die Lösehülse 52 aufgerastet beziehungsweise aufgeschnappt zu werden.

Beim Ausführungsbeispiel sind die Rastverbindungsmittel so ausgeführt, dass die Rastverbindung unter normalen Umständen nicht mehr lösbar ist. Man kann allerdings ohne weiteres auch eine lösbare Rastverbindung vorsehen.

Ist die Schutzhülse 53 montiert und die Schutz- und Löseeinheit 54 hergestellt, erstreckt sich die Schutzhülse 53 ausgehend vom Betätigungsabschnitt 48 unter axialer Überlappung des Anschlussabschnittes 14 in Richtung dessen Rückseite 15. Hierbei umschließt die Schutzhülse 53 sowohl den weiter oben erläuterten Zwischenraum 52 als auch den überlappten Längenabschnitt des Anschlussabschnittes 14 ringsum, also entlang des gesamten sich in der Umfangsrichtung erstreckenden Außenumfanges.

Die Rastverbindung findet seitens der Lösehülse 42 zweckmäßigerweise an dem Betätigungsabschnitt 48 statt, der aufgrund seiner radial abstehenden Formgebung dafür besonders prädestiniert ist.

Bei der exemplarisch gezeigten vorteilhaften Ausführungsform ist die Schutzhülse 53 becherförmig ausgebildet. Sie verfügt über einen zweckmäßigerweise im Wesentlichen hohlzylindrischen Hülsenabschnitt 55 und einen an einer Stirnseite des Hülsenabschnittes 55 angeordneten Bodenabschnitt 56, wobei der Bodenabschnitt eine im Folgenden als Bodendurchbrechung 57 bezeichnete zentrale, axiale Durchbrechung aufweist. Somit hat der Bodenabschnitt 56 insgesamt etwa eine ringförmige Gestalt.

Mit ihrem dem Bodenabschnitt 56 axial entgegengesetzten vorderen Endabschnitt 58 voraus ist die Schutzhülse 53 von der Vorderseite 16 her auf die Lösehülse 42 aufgesteckt, so dass ihr vorderer Endabschnitt 58 zur Rückseite 15 des Anschlussabschnittes 14 weist. Der Bodenabschnitt 56 der aufgesteckten und verrasteten Schutzhülse 53 befindet sich in einer dem Betätigungsabschnitt 48 axial außen vorgelagerten Position, wobei die Bodendurchbrechung 57 mit der die Lösehülse 42 axial durchsetzenden Durchgangsöffnung 62 fluchtet.

Als Rastmittel verfügt die Schutzhülse 53 beim Ausführungsbeispiel über eine im Übergangsbereich zwischen dem Bodenabschnitt 56 und dem Hülsenabschnitt 55 an ihrem Innenumfang ausgebildete Rastnut 63, bei der es sich vorzugsweise um eine zu der Längsachse 24 konzentrische Ringnut handelt und deren Nutöffnung nach radial innen weist. Im verrasteten Zustand greift die Lösehülse 42 mit dem radial außen liegenden ringförmigen Randabschnitt 64 des Betätigungsabschnittes 48 in die Rastnut 63 ein und ist somit axial unbeweglich bezüglich der Schutzhülse 53 fixiert.

Zweckmäßigerweise stützt sich die Lösehülse 42 mit ihrem Betätigungsabschnitt 48 axial an dem ihr vorgelagerten Bodenabschnitt 56 ab. Auf diese Weise ergibt sich eine besonders stabile Verbindung zwischen den beiden an sich separaten Komponenten 42, 53.

Die Rastnut 63 verfügt über eine äußere Nutflanke 65a und eine dieser zugewandte, näher bei der Vorderseite 16 liegende innere Nutflanke 65b. Mit seinem äußeren Randabschnitt 64 taucht der Betätigungsabschnitt 48 zwischen diese beiden Nutflanken 65a, 65b ein. Zweckmäßig ist es in diesem Zusammenhang, wenn die äußere Nutflanke 65a unmittelbar von dem Bodenabschnitt 56 gebildet ist.

Die zum Zwecke des Verlagerns in die Freigabestellung in die Lösehülse 42 einzuleitende Betätigungskraft F wird bei montierter Schutzhülse 53 von außen her direkt in die Schutzhülse 53 eingeleitet und von der Schutzhülse 53 auf die mit ihr verrastete Lösehülse 42 übertragen. Die Krafteinleitung kann insbesondere durch manuelle Beaufschlagung der Außenfläche des Bodenabschnittes 56 erfolgen.

Im Bereich des Bodenabschnittes 56 ist die Schutzhülse 53 außen zweckmäßigerweise konisch gestaltet, mit einem sich ausgehend von der Bodendurchbrechung 57 in Richtung zum Hülsenabschnitt 45 erweiternden vorderen Außenflächenabschnitt 66.

Um im Bereich der Bodendurchbrechung 57 ein Eindringen von Verunreinigungen zu vermeiden, trägt die Schutzhülse 53 zweckmäßigerweise einen zur Anlage am Außenumfang der eingesteckten Fluidleitung 2 vorgesehenen Dichtungsring 67. Bei einer topfförmig gestalteten Schutzhülse 53 ist der Dichtungsring 67 zweckmäßigerweise an dem Bodenabschnitt 56 mit zur Bodendurchbrechung 57 koaxialer Ausrichtung angeordnet. Exemplarisch ist der Dichtungsring 67 durch eine Schnappverbindung fixiert, insbesondere durch Einschnappen in eine Haltenut 68, die am Innenumfang der Bodendurchbrechung 57 ausgebildet ist. Der Dichtungsring 67 kann an der der Lösehülse 42 entgegengesetzten Axialseite über den Bodenabschnitt 56 vorstehen, wobei er dort insbesondere eine radial elastische Dichtlippe 72 aufweist, die sich gut dichtend an den Außenumfang einer eingesteckten Fluidleitung 2 anschmiegen kann.

Andere Befestigungsarten für den Dichtungsring 67 wären ebenfalls denkbar, beispielsweise stoffschlüssige Verbindungen und insbesondere eine integrale Ausgestaltung mit der Schutzhülse 53 im Rahmen eines Mehrkomponenten-Spritzgießverfahrens.

Eine optimale Abschirmwirkung entfaltet die Schutzhülse 53, wenn sich ihr Hülsenabschnitt 45 möglichst weit in der axialen Richtung über den Anschlussabschnitt 14 hinweg erstreckt. Allerdings ist zu beachten, dass die Schutzhülse 53 bei Betätigung der Schutz- und Löseeinheit 54 eine Axialbewegung beziehungsweise Verschiebebewegung 44 ausübt und diese Bewegung durch ein mit der Anschlussvorrichtung 1 bestücktes Trägerbauteil 4 nicht behindert werden darf. Exemplarisch ist die Schutzhülse 53 daher so ausgebildet, dass sie in der unbetätigten Stellung der Lösehülse 42 mit Abstand vor dem durch die rückseitige Stirnfläche 17 definierten Endbereich des Anschlussabschnittes 14 endet. Auf diese Weise verbliebe ohne zusätzliche Maßnahmen ein Spalt der Länge "s", der die Ablagerung von Schmutzpartikeln begünstigen würde. Es ist daher vorteilhaft, wenn der Schutzhülse 53 an der zur Rückseite 15 des Anschlussabschnittes 14 weisenden Stirnseite eine ringförmige Dichtungseinheit 73 koaxial vorgelagert ist, die den Spalt überbrückt oder ausfüllt. Indem die Dichtungseinheit 73 über gummielastische Eigenschaften verfügt, lässt sie sich axial verformen, so dass sie die Verschiebebewegung 44 der Schutzhülse 53 nicht blockieren kann. Wird die Schutz- und Löseeinheit 54 betätigt, findet ein axiales Stauchen der sich einerseits am vorderen Endabschnitt 58 der Schutzhülse 53 und andererseits an dem Trägerbauteil 4 abstützenden Dichtungseinheit 73 statt, wobei sie sich insbesondere in der strichpunktiert bei 74 angedeuteten Weise reversibel nach radial außen ausbauchen beziehungsweise auswölben kann.

Zur Vermeidung eines unerwünschten Zwischenraumes ist die Dichtungseinheit 73 zweckmäßigerweise an der Schutzhülse 53 befestigt. Exemplarisch ist sie in einem Mehrkomponenten-Spritzgießverfahren stirnseitig an die Schutzhülse 53 angeformt. Sie könnte allerdings auch beispielsweise eingeschnappt oder angeklebt sein.

Bedingt durch die zwischen dem Gehäusekörper 8 und dem Trägerbauteil 4 platzierte ringförmige Dichtung 18 ergibt sich bei montierter Anschlussvorrichtung 1 ein radialer Abstand zwischen der rückseitigen Stirnfläche 17 des Anschlussabschnittes 14 und dem Trägerbauteil 4, der von besagter Dichtung 18 ausgefüllt ist. Es ist daher zweckmäßig, die axiale Länge der Dichtungseinheit 73 so zu wählen, dass sie rückseitig über den Anschlussabschnitt 14 hinausragt und den durch die ringförmige Dichtung 18 bedingten axialen Zwischenraum bis zur Anlage am Trägerbauteil 4 ebenfalls überbrückt.

Würde die rückwärtige Stirnfläche 17 direkt an dem Trägerbauteil 4 anliegen, könnte die Dichtungseinheit 73 am rückseitigen Endbereich des Anschlussabschnittes 14 beziehungsweise auf Höhe der rückseitigen Stirnfläche 17 enden.

Es wäre auch möglich, die Dichtungseinheit 73 so zu gestalten, dass sie den Anschlussabschnitt 14 rückseitig umgreift. In Figur 2 ist dies bei 75 strichpunktiert angedeutet. Der Ringkörper der Dichtungseinheit 73 kann in diesem Fall einen L-förmigen Querschnitt haben und über zwei Schenkel verfügen, von denen der eine der Schutzhülse 53 zugewandt ist und der andere zwischen den Anschlussabschnitt 14 und das Trägerbauteil 4 eintaucht. Der eintauchende Dichtungsschenkel 75 kann die Funktion der ringförmigen Dichtung 18 übernehmen oder kann bei Bedarf auch die eventuell weiterhin vorhandene ringförmige Dichtung 18 rückseitig übergreifen.

Die Außenfläche der Schutzhülse 53 ist zweckmäßigerweise glattflächig ausgebildet, ebenso die Außenfläche der Dichtungseinheit 73. Auf diese Weise wird eine Ablagerung von Verunreinigungen behindert und der Abfluss von Reinigungsflüssigkeit begünstigt.

Im undeformierten Zustand hat die Dichtungseinheit 73 zweckmäßigerweise eine hohlzylindrische Gestalt. Ihre Wandstärke entspricht insbesondere derjenigen des Hülsenabschnittes 45.

Soll die Anschlussvorrichtung 1 die Möglichkeit bieten, mehrere Fluidleitungen 2 miteinander zu verbinden, können an dem Gehäusekörper 8 mehrere Anschlussabschnitte ausgebildet sein, denen jeweils in dem erläuterten Sinne ein Halteelement 25 und eine Schutz- und Löseeinheit 54 zugeordnet ist. Eine solche Anschlussvorrichtung 1 kann beispielsweise als L-Stück oder T-Stück ausgeführt sein.

## Patentansprüche

1. Anschlussvorrichtung für eine Fluidleitung, mit einem Gehäusekörper (8), der mindestens einen, sich in einer axialen Richtung erstreckenden Anschlussabschnitt (14) aufweist, an dessen Vorderseite eine Ausnehmung (12) ausmündet, in der ein zur lösbaren Fixierung einer eingesteckten Fluidleitung (2) dienendes, nach radial innen ragende Halteklauen (27) aufweisendes ringförmiges Halteelement (25) angeordnet ist, und mit einer den Halteklauen (27) axial vorgelagerten Lösehülse (42), die stirnseitig vorne aus der Ausnehmung (12) herausragt und einen der Vorderseite des Anschlussabschnittes (14) mit Abstand vorgelagerten, radial vorspringenden Betätigungsabschnitt (48) aufweist, wobei die Lösehülse (42) relativ zu dem Anschlussabschnitt (14) und dem Halteelement (25) axial verschiebbar ist und durch Einwirkung auf den Betätigungsabschnitt (48) derart axial gegen das Halteelement (25) drückbar ist, dass dessen Halteklauen (27) zur Freigabe einer eingesteckten Fluidleitung (2) nach radial außen bewegt werden, **dadurch gekennzeichnet, dass** sie eine bezüglich der Lösehülse (42) separate Schutzhülse (53)aufweist, die durch Verrastung so an der Lösehülse (42) fixiert oder fixierbar ist, dass sie gemeinsam mit der Lösehülse (42) eine axial verschiebbare Schutz- und Löseeinheit (54) bildet, wobei sich die Schutzhülse (53) unter axialer Überlappung des Anschlussabschnittes (14) in Richtung dessen Rückseite erstreckt und dabei sowohl den zwischen dem Betätigungsabschnitt (48) und dem Anschlussabschnitt (24) vorhandenen axialen Zwischenraum (52) als auch den überlappten Längenabschnitt des Anschlussabschnittes (14) ringsum umschließt.

2. Anschlussvorrichtung nach Anspruch 1, **dadurch gekennzeichnet, dass** der Betätigungsabschnitt (48) als von einem Hülsenabschnitt (45) der Lösehülse (42) radial abstehender Ringvorsprung ausgebildet ist.

3. Anschlussvorrichtung nach Anspruch 1 oder 2, **dadurch gekennzeichnet, dass** die Schutzhülse (53) mit dem Betätigungsabschnitt (48) der Lösehülse (42) verrastet ist.

4. Anschlussvorrichtung nach Anspruch 3, **dadurch gekennzeichnet, dass** die Schutzhülse (53) an ihrem Innenumfang eine insbesondere als Ringnut ausgebildete, nach radial innen hin offene Rastnut (63) aufweist, in die der Betätigungsabschnitt (48) mit seinem radial außen liegenden Randabschnitt (64) verrastend eingreift.

5. Anschlussvorrichtung nach einem der Ansprüche 1 bis 4, **dadurch gekennzeichnet, dass** die Schutzhülse (53) becherförmig mit einem mittig durchbrochenen Bodenabschnitt (56) ausgebildet ist und von axial außen her auf die Lösehülse (42) aufgesteckt ist, so dass ihr Bodenabschnitt (56) dem Betätigungsabschnitt (48) der Lösehülse (42) axial außen vorgelagert ist und die Bodendurchbrechung (57) mit der Durchgangsöffnung (62) der Lösehülse (42) fluchtet.

6. Anschlussvorrichtung nach einem der Ansprüche 1 bis 5, **dadurch gekennzeichnet, dass** sich die Lösehülse (42) an dem Bodenabschnitt (56) axial abstützt.

7. Anschlussvorrichtung nach Anspruch 5 oder 6 in Verbindung mit Anspruch 4, **dadurch gekennzeichnet, dass** der Bodenabschnitt (56) die äußere (65a) der beiden Nutflanken (65a, 65b) der Rastnut (63) bildet.

8. Anschlussvorrichtung nach einem der Ansprüche 5 bis 7, **dadurch gekennzeichnet, dass** an dem Bodenabschnitt (56) ein zur Bodendurchbrechung (57) koaxialer Dichtungsring (67) angeordnet ist, der am Außenumfang einer eingesteckten Fluidleitung (2) anliegen kann und der zweckmäßigerweise durch eine Schnappverbindung an dem Bodenabschnitt (56) fixiert ist.

9. Anschlussvorrichtung nach einem der Ansprüche 5 bis 8, **dadurch gekennzeichnet, dass** die Schutzhülse (53) einen sich an den Bodenabschnitt (56) koaxial anschließenden Hülsenabschnitt (55) aufweist, der den zwischen dem Betätigungsabschnitt (48) und der Vorderseite des Anschlussabschnittes (14) vorhandenen axialen Zwischenraum (52) überbrückt und daran anschließend den Anschlussabschnitt (14) axial überlappt.

10. Anschlussvorrichtung nach einem der Ansprüche 1 bis 9, **dadurch gekennzeichnet, dass** der Schutzhülse (53) an der zur Rückseite des Anschlussabschnittes (14) weisenden Stirnseite eine ringförmige, gummielastische Dichtungseinheit (73) vorgelagert ist, die axial verformbar ist.

11. Anschlussvorrichtung nach Anspruch 10, **dadurch gekennzeichnet, dass** die Dichtungseinheit (73) an der Schutzhülse (53) befestigt ist.

12. Anschlussvorrichtung nach einem der Ansprüche 1 bis 11, **dadurch gekennzeichnet, dass** die Schutzhülse (53) so ausgebildet ist, dass sie bei unbetätigter Lösehülse (42) mit Abstand vor der Rückseite des Anschlussabschnittes (14) endet.

13. Anschlussvorrichtung nach Anspruch 12 in Verbindung mit Anspruch 10 oder 11, **dadurch gekennzeichnet, dass** sich die Dichtungseinheit (73) ausgehend von der Schutzhülse (53) wenigstens bis zur Rückseite des Anschlussabschnittes (14) erstreckt, wobei sie zweckmäßigerweise rückseitig über den Anschlussabschnitt (14) hinausragt, insbesondere derart, dass sie sich an einem die Anschlussvorrichtung (1) tragenden Trägerbauteil (4) axial abstützen kann.

14. Anschlussvorrichtung nach einem der Ansprüche 1 bis 13, **dadurch gekennzeichnet, dass** sich rückseitig an den insbesondere zylindrisch gestalteten Anschlussabschnitt (14) ein zur Befestigung der Anschlussvorrichtung (1) dienender Befestigungsabschnitt (3) anschließt, dessen Außendurchmesser zweckmäßigerweise geringer ist als derjenige des Anschlussabschnittes (14) an seinem rückwärtigen Endbereich.

15. Anschlussvorrichtung nach Anspruch 14 in Verbindung mit Anspruch 13, **dadurch gekennzeichnet, dass** die Dichtungseinheit (73) den Anschlussabschnitt (14) rückseitig umgreift.
